# EUROPEAN PATENT APPLICATION

(11) **EP 3 058 828 A1**
(43) Date of publication of application: **24.08.2016**
(21) Application number: 15155860.8
(22) Date of filing: 20.02.2015
(51) Int. Cl.: A22C 13/00, A22C 15/00, B65B 7/02

(54) **A tubular food casing and a method for closing a tubular food casing**

(71) Applicant: ViskoTeepak Belgium NV, 3920 Lommel (BE)
(72) Inventor: Thomsen, Kai, 24969 Schobüll (DE); Böhme,Heinrich-Wilhelm, 21398 Neetze (DE)
(74) Representative: Papula Oy

(57) **Abstract**

The present invention relates to a tubular food casing (1) with a double-folded portion (2) having an outbound portion (3), an inbound portion (4) and a bend (5) between the outbound portion (3) and the inbound portion (4). The inbound portion (4) is bound to the outbound portion (3) by a knot (6) formed of the outbound portion (3) and the inbound portion (4), the outbound portion (3) and the inbound portion (4) thereby forming an end loop (7) outside the knot (6) for suspending the tubular food casing. The present invention also relates to a method for closing a tubular food casing.

## Description

### FIELD OF THE INVENTION

The invention relates to a tubular food casing. The invention also relates to a method for closing a tubular food casing.

### BACKGROUND OF THE INVENTION

Food products, such as sausages and other meat products, are often packaged in tubular food casings, the ends of which are tied with a string, clipped or similarly secured. In many cases, a separate hanger is secured to the casing to enable suspending the food casing over a hook or a rack or a similar device during manufacture, e.g. smoking or ripening, other preparatory stages of processing and during transport. However, such means of closing and suspending tubular food casings may not be suitable for very large and heavy food products, such as large salami sausages. Such large food products may have to be handled and stored in a horizontal position during processing steps, such as smoking and ripening, as the means for closing and suspending the tubular food casing may not be able to withstand the weight of the product.

### SUMMARY

The invention relates to a tubular food casing according to claim 1.

The invention further relates to a method for closing a tubular food casing according to claim 9.

### BRIEF DESCRIPTION OF THE DRAWINGS

The accompanying drawings, which are included to provide a further understanding of the invention and constitute a portion of this specification, illustrate embodiments of the invention and together with the description help to explain the principles of the invention. In the drawings:
**Figure 1** shows an embodiment of the tubular food casing; and
**Figure 2** illustrates an embodiment of the method for closing an end of the tubular food casing and an embodiment of the tubular food casing.

### DETAILED DESCRIPTION

Reference will now be made in detail to the embodiments of the present invention.

The present invention relates to a tubular food casing with a double-folded portion having an outbound portion, an inbound portion and a bend between the outbound portion and the inbound portion. The inbound portion is bound to the outbound portion by a knot formed of the outbound portion and the inbound portion, the outbound portion and inbound portion thereby forming an end loop outside the knot for suspending the tubular food casing.

The end loop and the knot are thus formed of the material of the tubular food casing. The portions of the tubular food casing may be pulled taut so that the knot is secure. The inbound portion and the outbound portion may frictionally grip each other so that they remain in place even under tension. The knot provides a secure closure that may withstand the pressures developed during stuffing and suspension of the stuffed tubular food casing during processing.

The outbound portion, the inbound portion and the bend between them form an end loop that defines an opening. The opening may be of sufficient dimensions to accommodate means for suspending the tubular food casing, such as a hook, a rod, a rack or other support member or fastening device. The end loop may thus be secured about such means for suspending the tubular food casing to suspend the tubular food casing.

One end or both ends of the tubular food casing may be closed in the novel manner described herein. The tubular food casing may be soaked in water or an aqueous solution to render the material of the tubular food casing pliable prior to closing an end in the novel manner described herein. One end of the tubular food casing may also be closed using any other known means, such as with a clip or a string, for instance after stuffing.

At least one of the outbound portion and the inbound portion may pass around the inbound portion or the outbound portion, respectively, so that the outbound portion and the inbound portion are intertwined with one another along their outer surfaces, thereby forming the knot. The outbound portion and the inbound portion may be intertwined with one another along their outer surfaces only, as opposed to a portion passing through the material of a second portion e.g. through a perforation made in the second portion. This has the technical effect that there is no need to make any perforations, cuts, heat seals or the like to bind the portions together.

The knot may, in principle, be a slip knot, which is capable of slipping, i.e. moving. A slip knot may slip along the outbound portion or along the inbound portion upon tension. Such a knot may be e.g. a simple slip knot or a noose knot.

The knot may also be a non-slip knot, i.e. a knot that does not essentially slip or move. Such a non-slip knot may not essentially slip or move along the outbound portion or along the inbound portion upon tension. A non-slip knot remains tautly in place during stuffing and when the tubular food casing is suspended. An example of such a non-slip knot is the bowline knot.

The outbound portion and the inbound portion may be intertwined with one another along their outer surfaces within the double-folded portion, i.e. within the region or length of the double-folded portion. A double-folded portion may also be referred to as a bight.

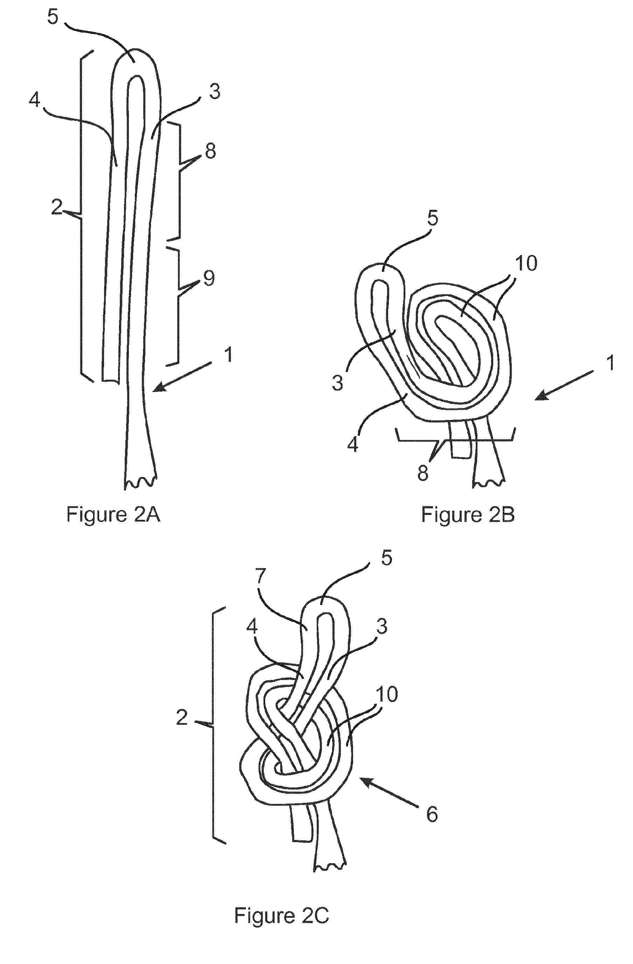

In an embodiment, a first segment of the double-folded portion passes around a second segment of the double-folded portion and through a knot loop thus formed, whereby the end loop is formed of the double-folded portion. In such an embodiment, the knot may be e.g. an overhand loop knot formed by tying an overhand knot in the double-folded portion (the knot as depicted in Fig. 2), a knot commonly known as the figure-eight loop or Flemish loop, or a knot commonly known as the double figure eight loop. Such an embodiment has the technical effect that the knot is secure and simple to form.

A portion of the tubular food casing on the side of the knot opposite to the end loop, i.e. a portion of the tubular food casing outside the knot that extends in the opposite direction from the end loop towards the other end of the tubular food casing, may be stuffed with a food product. Food products that may be stuffed into tubular food casings may include any food commonly processed which requires handling or transportation in a casing, such as e.g. sausage meats or meat emulsion, other processed meat products such as hamburgers, hams or turkeys, or cheese.

A skilled person will understand that a tubular food casing may be stuffed with a food product and then formed into an embodiment of the tubular food casing according to the invention.

The tubular food casing according to one or more embodiments may also be prefabricated and optionally cut-to-size, i.e. cut to a predetermined length, for stuffing later.

The type, material and dimensions of a tubular food casing may be selected based on the food product to be enclosed therein and on other considerations. The tubular food casing should have a sufficient inherent strength to support a selected food product.

The tubular food casing may in principle be any tubular food casing based on any material, such as cellulose, plastic or textile or any mixtures thereof.

In the context of this specification, the term "plastic" should be understood as referring to any type of plastic suitable for use in a food casing. Plastics such as polyamides or PVDC and mixtures thereof are commonly used in food casings.

In the context of this specification, the term "textile" should be understood as referring to a textile comprising e.g. natural fibers, linen, silk, wool, modified natural fibers, synthetic fibers, or any mixtures thereof.

The tubular food casing may be a cellulose-based food casing, such as a food casing based on regenerated cellulose. In the context of this specification, the term "regenerated cellulose" should be understood as referring to cellulose regenerated from viscose. The viscose may be xanthate type viscose. However, while xanthate type viscose is commonly used, it is to be understood that viscose may also refer to cellulose having similar characteristics produced by any other technology for dissolving and extruding cellulose, including e.g. aminomethanate viscose (also known as carbamate or aminomethanate viscose and cupraammonium type viscose) as well as any solution based on non-derivatized cellulose, such as cellulose-tertiary amine oxide (NMMO) solutions and solutions based on ionic liquids.

A cellulose-based food casing may comprise a fibrous reinforcement. It has the technical effect that the fibrous reinforcement may provide mechanical strength or reinforcement to the cellulose-based food casing. In the context of this specification, the term "fibrous reinforcement" should be understood as referring to fibrous material that is capable of mechanically reinforcing the cellulose-based food casing. The fibrous reinforcement may be a paper made from a strong cellulose fibre. Various types of cellulose fibre may be used, e.g. natural cellulose fibre such as hemp, but also a synthetic fibre, e.g. regenerated cellulose fibre in the form of rayon, may be used. The fibrous reinforcement may also be e.g. a woven sheet or web formed from a strong cellulose fibre.

A suitable tubular food casing may thus also be a tubular cellulose-based food casing comprising a fibrous reinforcement comprising an inside surface and an outside surface and at least one layer comprising regenerated cellulose on the outside surface of the fibrous reinforcement, on the inside surface of the fibrous reinforcement or on both.

The cellulose-based food casing may comprise a fibrous reinforcement and an inside layer comprising regenerated cellulose on the inside surface of the fibrous reinforcement. The cellulose-based food casing may comprise a fibrous reinforcement and an outside layer comprising regenerated cellulose on the outside surface of the fibrous reinforcement. Further, the cellulose-based food casing may comprise a fibrous reinforcement and an inside layer and an outside layer comprising regenerated cellulose on the inside surface and on the outside surface of the fibrous reinforcement, respectively.

Such tubular food casings based on regenerated cellulose may be prepared e.g. by impregnating a fibrous reinforcement comprising an inside surface and an outside surface with regenerated cellulose, for instance viscose, by applying regenerated cellulose on the inside surface, on the outside surface, or the inside surface and the outside surface of the fibrous reinforcement. In other words, an inside layer and/or an outside layer of the cellulose-based food casing is formed by regenerated cellulose impregnated on the inside surface and/or the inside surface of the fibrous reinforcement. Cellulose-based food casings comprising regenerated cellulose may be coagulated after application of regenerated cellulose e.g. in an acid bath. Cellulose-based food casings that have been coagulated may be further processed by washing steps.

The cellulose-based food casing may be a single layer viscose casing. In the context of this specification, the term "single layer viscose casing" or "SVC" should be understood as referring to a cellulose-based food casing comprising a fibrous reinforcement and an outside layer or an inside layer comprising regenerated cellulose. In other words, a single layer viscose casing comprises a fibrous reinforcement comprising an inside surface and an outside surface, wherein the inside surface or the outside surface is impregnated with viscose by applying viscose to either the inside surface or the outside surface of the fibrous reinforcement only. Such a casing has the added utility that it is relatively simple and cost-effective to manufacture.

The cellulose-based food casing may be a double layer viscose casing. In the context of this specification, the term "double layer viscose casing" or "DVC" should be understood as referring to a cellulose-based food casing comprising an inside layer, an outside layer and a fibrous reinforcement between the outside layer and inside layer, wherein the outside layer and inside layer comprise regenerated cellulose. In other words, a double layer viscose casing comprises a fibrous reinforcement impregnated with viscose by applying viscose to both sides of the fibrous reinforcement. Such a casing has the added utility that it is mechanically relatively strong.

The weight of the fibrous reinforcement may be e.g. 13-28 g/m², or 21-23 g/m². The weight of the regenerated cellulose may be e.g. 32-50 g/m², or 32-40 g/m². The weight of the fibrous reinforcement may be 13-28 g/m² and the weight of the regenerated cellulose may be 32-50 g/m². The weight of the fibrous reinforcement may also be 21-23 g/m² and the weight of the regenerated cellulose may be 32-40 g/m².

The present invention also relates to a method for closing an end of a tubular food casing, wherein the method comprises
bending the tubular food casing to form a double-folded portion having an outbound portion, an inbound portion and a bend between the outbound portion and the inbound portion; and
binding the inbound portion to the outbound portion by a knot formed of the outbound portion and the inbound portion, such that the outbound portion and the inbound portion form an end loop outside the knot for suspending the tubular food casing.

The method is suitable for manufacturing the tubular food casing according to one or more embodiments of the invention.

The method may further comprise pulling the tubular food casing taut to secure the knot.

The method may be performed manually, for instance by a stuffing operator, or a suitable apparatus.

The method may also comprise pre-treating the tubular food casing, e.g. soaking the tubular food casing in water or an aqueous solution prior to render the material of the tubular food casing pliable prior to closing an end of the tubular food casing according to one or more embodiments of the method.

The method may comprise passing at least one of the outbound portion and the inbound portion around the inbound portion or the outbound portion, respectively, so that the outbound portion and the inbound portion are intertwined with one another along their outer surfaces and thereby forming the knot. The outbound portion and the inbound portion may be intertwined with one another along their outer surfaces only, as opposed to a portion passing through the material of a second portion e.g. through a perforation made in the second portion.

The knot may, in principle, be a slip knot, which is capable of slipping, i.e. moving. A slip knot may slip along the outbound portion or along the inbound portion upon tension. Such a knot may be e.g. a simple slip knot or a noose knot. The knot may also be a non-slip knot, i.e. a knot that does not essentially slip or move. Such a non-slip knot may not essentially slip or move along the outbound portion or along the inbound portion upon tension.

The method may comprise passing at least one of the outbound portion and the inbound portion around the inbound portion or the outbound portion, respectively, so that the outbound portion and the inbound portion are intertwined with one another along their outer surfaces, thereby forming the knot within the double-folded portion, i.e. within the region or length of the double-folded portion.

In an embodiment, the method comprises bending the tubular food casing to form a double-folded portion having an outbound portion and and inbound portion; passing a first segment of the double-folded portion around a second segment of the double-folded portion, thereby forming a knot loop; and passing the first segment of the double-folded portion through the knot loop, whereby an end loop is formed of the double-folded portion.

A portion of the tubular food casing may be stuffed with a food product. The portion may be stuffed with the food product prior to closing an end of the tubular food casing prior to closing an end of the tubular food casing according to one or more embodiments of the method, or it may be stuffed after closing an end of the tubular food casing according to one or more embodiments of the method.

The method may also comprise closing the other end of the tubular food casing. The closing may be done using other means, such as a clip, a string, or a cord, prior or after stuffing.

The method may further comprise cutting the tubular food casing to a predetermined length.

The type, material and dimensions of a tubular food casing may be selected based on the food product to be enclosed therein and on other considerations. The tubular food casing should have a sufficient inherent strength to support a selected food product.

The tubular food casing may in principle be any tubular food casing based on any material, such as cellulose, plastic or textile or any mixtures thereof.

The tubular food casing may be a tubular cellulose-based food casing, such as a tubular food casing based on regenerated cellulose.

A tubular cellulose-based food casing may comprise a fibrous reinforcement.

A suitable tubular food casing may thus also be a cellulose-based food casing comprising a fibrous reinforcement comprising an inside surface and an outside surface and at least one layer comprising regenerated cellulose on the outside surface of the fibrous reinforcement, on the inside surface of the fibrous reinforcement or on both.

The cellulose-based food casing may comprise a fibrous reinforcement and an inside layer comprising regenerated cellulose on the inside surface of the fibrous reinforcement. The cellulose-based food casing may comprise a fibrous reinforcement and an outside layer comprising regenerated cellulose on the outside surface of the fibrous reinforcement. Further, the cellulose-based food casing may comprise a fibrous reinforcement and an inside layer and an outside layer comprising regenerated cellulose on the inside surface and on the outside surface of the fibrous reinforcement, respectively.

The cellulose-based food casing may be a single layer viscose casing or a double layer viscose casing.

The weight of the fibrous reinforcement may be e.g. 13-28 g/m², or 21-23 g/m². The weight of the regenerated cellulose may be e.g. 32-50 g/m², or 32-40 g/m². The weight of the fibrous reinforcement may be 13-28 g/m² and the weight of the regenerated cellulose may be 32-50 g/m². The weight of the fibrous reinforcement may also be 21-23 g/m² and the weight of the regenerated cellulose may be 32-40 g/m².

A technical effect of one or more of the example embodiments disclosed is that the tubular food casing is suitable for hanging in a vertical, i.e. upright, position. The tubular food casing according to one or more embodiments may allow for suspending very large and heavy stuffed food products for manufacture, storage and transport in a vertical position and may have a reduced risk of food product falling off when suspended. This may allow fitting more food products vertically in a space with limited area, such as a sausage trolley or a ripening area. The food product stuffed in the tubular food casing may also tend to hang uniformly.

For instance, it may be possible to form sausages having a length of over 300 cm and suspend them in an upright position without the danger of the sausages falling off the casing during smoking and ripening processes. Such sausages may have, depending on their diameter, a weight of over 30 kg. Strings and clips are typically unable to allow forming sausages having a length of over 160-170 cm, depending on the diameter of the sausage, as they are prone to fail under heavy loads.

Further, as longer (and so also heavier) food products may be enclosed in the tubular food casing according to one or more embodiments, fewer ends in the food products per weight of food product may be produced during slicing of the food product, such as a salami sausage. This may improve yield of slices having a required size for packaging and may thus reduce waste resulting from disposing of the ends of the food product.

One or more embodiments of the tubular food casing also obviate the need to provide a separate means or a member for suspending and/or closing the tubular food casing, such as a clip, a string or a cord loop. There is also no need to make other modifications such as perforations, cuts or heat seals in the tubular food casing that would modify and possibly also damage the material of the tubular food casing. The knot may be formed by hand or by using a suitable apparatus.

Several of these technical effects may thus improve efficiency and reduce costs of the manufacture of the tubular food casing and of the food product.

The embodiments of the invention described hereinbefore may be used in any combination with each other. Several of the embodiments may be combined together to form a further embodiment of the invention. A product or a method, to which the invention is related, may comprise at least one of the embodiments of the invention described hereinbefore.

Reference will now be made in detail to the embodiments of the present invention, examples of which are illustrated in the accompanying drawings.

For reasons of simplicity, item numbers will be maintained in the following exemplary embodiments in the case of repeating components.

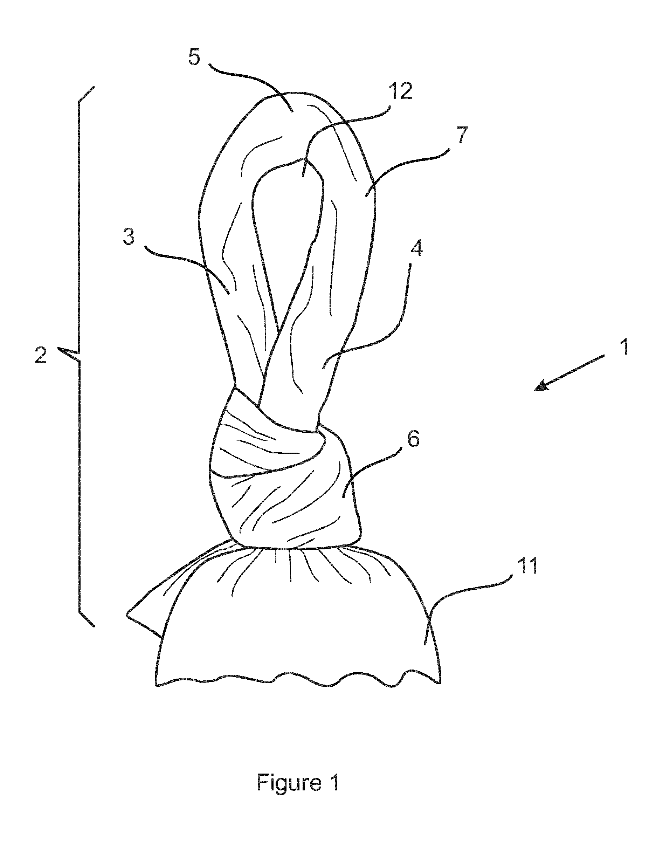

Figure 1 illustrates an exemplary embodiment of the tubular food casing. An end of the tubular food casing 1 is folded double into a double-folded portion 2. The double-folded portion comprises an outbound portion 3, an inbound portion 4 and a bend 5 between the outbound portion 3 and the inbound portion 4. The inbound portion 4 is bound to the outbound portion 3 by the knot 6, which is formed of the outbound portion 3 and the inbound portion 4. Thus an end loop 7 is formed outside the knot 6. The end loop 7 defines an opening 12 for suspending the tubular food casing 1. The opening 12 is sufficiently large to accommodate a support member (not shown), such as a hook, a rod or a rack, which may be inserted through the opening 12 to hang the tubular food casing in a vertical position. The portion 11 of the tubular food casing which is outside the knot 6 on the side of the knot 6 opposite to the end loop 7, i.e. extending to the opposite direction from the end loop 7, is stuffed with a food product such as sausage emulsion.

Figure 2 shows an embodiment of the tubular food casing and illustrates schematically the method of closing the same. In Fig. 2A, an end the tubular food casing 1 is bent or folded so as to form a double-folded portion 2, i.e. a bight. The double-folded portion 2 comprises an outbound portion 3, an inbound portion 4 and a bend 5 between said portions. In Fig. 2B, a first segment 8 (also shown in Fig. 2A) of the double-folded portion 2 is passed around a second segment 9 (shown only in Fig. 2A for clarity) of the double-folded portion 2. Thus a knot loop 10 is formed of the double-folded portion 2 and the outbound portion 3 and the inbound portion 4 thereof. As illustrated in Fig. 2C, the first segment 8 is passed through the knot loop 10 so that a knot 6 and an end loop 7 is formed of the double-folded portion 2. The resulting knot is commonly referred to an overhand loop knot. The knot loop 10 may also be twisted prior to passing the first segment 8 through the knot loop 10, whereby a figure eight loop knot or a double figure eight loop knot is formed (not shown). The knot 6 is thus formed and the outbound portion 3 and the inbound portion 4 are intertwined with one another along their outer surfaces within the double-folded portion 2.

It is obvious to a person skilled in the art that with the advancement of technology, the basic idea of the invention may be implemented in various ways. The invention and its embodiments are thus not limited to the examples described above, instead they may vary within the scope of the claims.

## Claims

1. A tubular food casing (1) with a double-folded portion (2) having an outbound portion (3), an inbound portion (4) and a bend (5) between the outbound portion (3) and the inbound portion (4); wherein the inbound portion (4) is bound to the outbound portion (3) by a knot (6) formed of the outbound portion (3) and the inbound portion (4), the outbound portion (3) and inbound portion (4) thereby forming an end loop (7) outside the knot (6) for suspending the tubular food casing.

2. The tubular food casing according to claim 1, wherein at least one of the outbound portion (3) and the inbound portion (4) passes around the inbound portion (4) or the outbound portion (3), respectively, so that the outbound portion (3) and the inbound portion (4) are intertwined with one another along their outer surfaces, thereby forming the knot (6).

3. The tubular food casing according to claim 1 or 2, wherein the knot (6) is a non-slip knot.

4. The tubular food casing according to any one of claims 1 - 3, wherein the outbound portion (3) and the inbound portion (4) are intertwined with one another along their outer surfaces within the double-folded portion (2).

5. The tubular food casing according to any one of claims 1 - 4, wherein a first segment (8) of the double-folded portion (2) passes around a second segment (9) of the double-folded portion (2) and through a knot loop (10) thus formed, whereby the end loop (7) is formed of the double-folded portion (2).

6. The tubular food casing according to any one of claims 1 - 5, wherein a portion (11) of the tubular food casing on the side of the knot (6) opposite to the end loop (7) is stuffed with a food product.

7. The tubular food casing according to any one of claims 1 - 6, wherein the tubular food casing (1) is a cellulose-based food casing comprising a fibrous reinforcement comprising an inside surface and an outside surface and at least one layer comprising regenerated cellulose on the outside surface of the fibrous reinforcement, on the inside surface of the fibrous reinforcement or on both.

8. The tubular food casing according to claim 7, wherein the weight of the fibrous reinforcement is 13-28 g/m² or 21-23 g/m² and the weight of the regenerated cellulose is 32-50 g/m² or 32-40 g/m².

9. A method for closing an end of a tubular food casing, wherein the method comprises
bending the tubular food casing (1) to form a double-folded portion (2) having an outbound portion (3), an inbound portion (4) and a bend (5) between the outbound portion (3) and the inbound portion (4); and
binding the inbound portion (4) to the outbound portion (3) by a knot (6) formed of the outbound portion (3) and the inbound portion (4), such that the outbound portion (3) and the inbound portion (4) form an end loop (7) outside the knot (6) for suspending the tubular food casing.

10. The method according to claim 9, wherein the method comprises passing at least one of the outbound portion (3) and the inbound portion (4) around the inbound portion (4) or the outbound portion (3), respectively, so that the outbound portion (3) and the inbound portion (4) are intertwined with one another along their outer surfaces, thereby forming the knot (6).

11. The method according to claim 9 or 10, wherein the knot (6) is a non-slip knot.

12. The method according to any one of claims 9 - 11, wherein the method comprises passing at least one of the outbound portion (3) and the inbound portion (4) around the inbound portion (4) or the outbound portion (3), respectively, so that the outbound portion (3) and the inbound portion (4) are intertwined with one another along their outer surfaces, thereby forming the knot (6) within the double-folded portion (2).

13. The method according to any one of claims 9 - 12, wherein the method comprises bending the tubular food casing (1) to form a double-folded portion (2) having an outbound portion (3) and and inbound portion (4); passing a first segment (8) of the double-folded portion (2) around a second segment (9) of the double-folded portion, thereby forming a knot loop (10); and passing the first segment (8) of the double-folded portion (2) through the knot loop (10), whereby an end loop (7) is formed of the double-folded portion (2).

14. The method according to any one of claims 9 - 13, wherein a portion (11) of the tubular food casing is stuffed with a food product.

15. The method according to any one of claims 9 - 14, wherein the tubular food casing (1) is a cellulose-based food casing comprising a fibrous reinforcement comprising an inside surface and an outside surface and at least one layer comprising regenerated cellulose on the outside surface of the fibrous reinforcement, on the inside surface of the fibrous reinforcement or on both.
